# EUROPEAN PATENT SPECIFICATION

(11) **EP 0 705 805 B1**
(45) Date of publication and mention of the grant of the patent: **05.12.2001**
(21) Application number: 95114668.7
(22) Date of filing: 18.09.1995
(51) Int. Cl.: C04B 35/587, C04B 35/593, F16C 33/04, C04B 35/65

(54) **Sintered body of silicon nitride for use as sliding member**
Siliciumnitrid-Sinterkörper zur Verwendung als Gleitlagerbauteil
Corps fritté en nitrure de silicium pour l'utilisation comme palier à glissement

(30) Priority: 16.09.1994 JP 24677894; 28.12.1994 JP 34053194; 22.06.1995 JP 15573195; 19.07.1995 JP 18264295
(43) Date of publication of application: 10.04.1996
(73) Proprietor: HONDA GIKEN KOGYO KABUSHIKI KAISHA, Minato-ku, Tokyo (JP)
(72) Inventor: Iwamoto, Jun, c/o Honda R & D Co., Ltd., Wako-shi, Saitama (JP); Kamide, Naoki, c/o Honda R & D Co., Ltd., Wako-shi, Saitama (JP); Ohta, Naoki, c/o Honda R & D Co., Ltd., Wako-shi, Saitama (JP); Kawakami, Yasunobu, c/o Honda R & D Co., Ltd., Wako-shi, Saitama (JP)
(74) Representative: Liska, Horst, Dr.-Ing.

(56) References cited:
- EP-A- 0 073 523
- EP-A- 0 479 214
- EP-A- 0 520 211
- EP-A- 0 593 240
- GB-A- 2 062 688
- CHEMICAL ABSTRACTS, vol. 99, no. 12, 19 September 1983 Columbus, Ohio, US; abstract no. 92704, "High-strength silicon nitride sintered body" XP002008456 & JP-A-58 060 675 (NGK SPARK PLUG CO., LTD.) 11 April 1983

## Description

The present invention relates to a ceramic material having improved sliding characteristics, and more particularly to a sintered body of silicon nitride for use as a sliding member.

Sintered bodies of silicon nitride have heretofore been used as sliding members at high temperatures, under heavy loads, and at high speeds of sliding movement because they have higher strength at high temperatures, greater hardness, and greater resistance to corrosion than metallic materials. For example, since sintered bodies of silicon nitride such as Si₃N₄ or sialon (Si-Al-O-N) in the form of a solid solution composed of Si₃N₄, Al, and O₂ have higher strength at high temperatures, greater hardness, and greater resistance to corrosion than metallic materials, they are used as the rollers and rings of roller bearings, slide bearings, the cylinder liners, piston rings, and rocker arms of internal combustion engines, reduction rolls, metal cutting tools, dies, and so on.

For reducing the coefficient of friction and the wear of sintered bodies of silicon nitride and increasing seizure limits, it is necessary to supply a lubricant to regions where they are held in sliding contact with other members. Heretofore, various research efforts have been made to develop self-lubricating sintered bodies of silicon nitride which have a lubricating capability itself for improved sliding characteristics thereof for the purposes of simplifying a mechanism for supplying a lubricant and providing a maintenance-free oil supply system.

Among those self-lubricating sintered bodies of silicon nitride are a sliding member containing boron nitride dispersed in the matrix (Japanese laid-open patent publication No. 59-26978), a sintered body of silicon nitride containing a filler of silicon carbide which includes carbon and free carbon as a solid lubricant (Japanese patent publication No. 61-314), a material composed of a base of non-oxide ceramic and a solid lubricant of carbon and Teflon embedded in the base (Japanese laid-open patent publication No. 59-208219), a material containing lead, tin, and indium impregnated as a solid lubricant in the pores of ceramics (Japanese patent application No. 62-148385), and a material including a solid lubricant of BN or carbon added to SiC, Si₃N₄, or sialon (Japanese laid-open patent publication No. 60-21864).

However, the above conventional materials have been proposed primarily with a view to allowing sliding surfaces to function with no oil supplied by adding a solid lubricant to a sintered body of silicon nitride. These prior efforts have not been directed to sintered bodies of silicon nitride suitable for use in fluid-lubricated environments.

Specifically, if a sintered body of silicon nitride is used as a sliding member in fluid-lubricated environments, then it is necessary to supply a sufficient amount of lubricating oil to the sliding member so that the sliding member will not run short of lubricating oil. It is important for such a sintered body of silicon nitride to have good wettability by the lubricating oil. However, the conventional sintered bodies of silicon nitride which simply contain an added solid lubricant have failed to have a desired level of good wettability because they are of poor lipophilic nature.

There has heretofore been a very limited amount of research work done to improve a sintered body of silicon nitride so as to increase its lipophilic capability with respect to lubricating oil.

Japanese laid-open patent publications Nos. 6-122555 and 6-183841 disclose low-friction ceramic materials composed of a matrix of non-oxide ceramic and at least one of a transition metal and a compound thereof which is dispersed in the matrix. With the metal or its compound disposed in the matrix, the ceramic materials have an improved capability of adsorbing oil, a low coefficient of friction, and a high degree of strength.

More specifically, an Fe oxide is added to a powder of silicon nitride, and an Fe - Si compound produced by a reaction of Fe and Si that is dissociated from silicon nitride is dispersed and separated out on the surface of the sintered body for increasing the wettability by lubricating oil.

The above prior art, however, fails to reveal sufficient considerations for limiting the size of the separated substance for reducing the contact angle that is measured with a view to increasing the wettability by lubricating oil. In addition, no sufficient amount of study has been made with respect to the selection of additive elements effective to increase the wettability or an optimum compound form at the time a sulfide, a nitride, or an oxide is added.

Since the materials of sintered bodies of silicon nitride are difficult to be sintered by themselves, a sintering additive is added to the materials to produce dense sintered bodies. The addition of a sintering additive of boron (B) is disclosed in Japanese laid-open patent publication No. 59-217675 and Japanese patent publication No. 62-14506. While the added sintering additive of boron is effective to improve the bending strength and sinterability, it is not added in view of the sliding characteristics of sintered bodies of silicon nitride used as sliding members.

One proposal for improving the sliding characteristics of a sintered body of silicon nitride used as a sliding member is revealed in Japanese laid-open patent publication No. 2-217380. This publication discloses a sintered body of silicon nitride for use as a sliding member, which is composed of particles of an inorganic compound such as a carbide or the like and a reaction sintered body of silicon nitride formed from particles smaller than the particles of an inorganic compound. It is also disclosed that a sintered body of silicon nitride for use as a sliding member is required to have high hardness, a good affinity for a member with which it is held in sliding contact, high resistance to corrosion, high tenacity and thermal shock resistance, and a high Young's modulus (E).

It is therefore an object of the present invention to provide a sintered body of silicon nitride for use as a sliding member in fluid-lubricated environments, the sintered body of silicon nitride having a small contact angle with respect to lubricating oil and being of excellent lipophilic nature.

According to the present invention, a sintered body of silicon nitride allows lubricating oil to be easily attached to a sliding surface thereof, has a low coefficient of friction, is subject to a low rate of wear, and has a high seizure limit. Furthermore, it is possible according to the present invention to provide a sliding ceramic material which has, in addition to the above sliding characteristics, high strength, and thermal conductivity and Young's modulus which are controlled.

According to the present invention, there is provided a sintered body of silicon nitride for use as a sliding member in fluid-lubricated environments, produced by sintering a mixed powder composed of a sulfide of a transition metal, a silicon-nitride-based powder and a sintering additive, the sintered body formed with minute pores, minute acicular silicon nitride and a silicide of said transition metal being uniformly dispersed in at least the surface of the sintered body of silicon nitride, said sintered body having a thermal conductivity less than 32.9 W/(m·K) and pore area percentage of more than 7.56 %.

The silicon-nitride-based powder may comprise a powder of silicon nitride and at least one of a nitride and a sulfide of at least one metal element selected from the group consisting of molybdenum, nickel, cobalt, chromium, manganese, tungsten, and tantalum, said metallic compound being generated by reaction sintering of said powder of silicon nitride and said at least one of a nitride and a sulfide of at least one metal element.

The metallic compound has a maximum particle diameter of at most 30 µ, and a total area percentage ranging from 0.1 to 30 % with respect to the matrix. More preferably, the metallic compound has a maximum particle diameter of at most 20 µ, and a total area percentage ranging from 0.5 to 25 % with respect to the matrix.

The silicon-nitride-based powder may comprise a powder of silicon nitride and a sulfide of a transition metal, the arrangement being such that minute pores, minute acicular silicon nitride, and a silicide of the transition metal are uniformly dispersed in at least the surface of the sintered body of silicon nitride. The transition metal may comprise at least one of molybdenum and iron.

The mixture may further comprise boron, the sintered body being produced by kneading the mixture, molding the mixture into a molded body, and firing said molded body, so that the Young's modulus (E) of the sintered body can be adjusted. For example, if the sintered body contains 1 to 20 weight % of boron and 1 to 15 weight % of the sintering additive, then the sintered body may have a Young's modulus (E) in the range of from 100 GPa to 295 GPa.

The above and further objects, details and advantages of the present invention will become apparent from the following detailed description of preferred embodiments thereof, when read in conjunction with the accompanying drawings.
FIG. 1 is a graph showing the relationship between the contact angle and the separated deposit in Experimental Examples 1, 2 of a comparative sintered body of silicon nitride;
FIG. 2 is a graph showing the relationship between the contact angle and the separated deposit in comparative Experimental Example 3 of the comparative sintered body of silicon nitride;
FIG. 3 is a graph showing the relationship between the contact angle and the separated deposit in comparative Experimental Example 4 of the comparativesintered body of silicon nitride;
FIG. 4 is a graph showing the relationship between the contact angle and the separated deposit in comparative Experimental Examples 5, 6, of the comparative sintered body of silicon nitride;
FIG. 5 is a graph showing the relationship between the contact angle and the separated deposit in comparative Experimental Example 7 of the comparative sintered body of silicon nitride;
FIG. 6 is a graph showing the relationship between the contact angle and the separated deposit in comparative Experimental Example 8 of the comparative sintered body of silicon nitride;
FIG. 7 is a graph showing the relationship between the contact angle and the separated deposit in comparative Experimental Examples 9, 10 of the comparative sintered body of silicon nitride;
FIG. 8 is a photograph showing an optical microscopic representation of the granular structure of a test piece of comparative Experimental Example 1;
FIG. 9 is a photograph showing an optical microscopic representation of the structure of a test piece, sintered at a temperature of 1800°C when 0 wt % of molybdenum disulfide (MoS₂) was added, of Experimental Example 11 of a sintered body of silicon nitride according to the present invention;
FIG. 10 is a photograph showing an optical microscopic representation of the structure of a test piece, sintered at a temperature of 1800°C when 1 wt % of molybdenum disulfide (MoS₂) was added, of Experimental Example 11 of the sintered body of silicon nitride according to the present invention;
FIG. 11 is a photograph showing an optical microscopic representation of the structure of a test piece, sintered at a temperature of 1800°C when 5 wt % of molybdenum disulfide (MoS₂) was added, of Experimental Example 11 of the sintered body of silicon nitride according to the present invention;
FIG. 12 is a photograph showing an optical microscopic representation of the structure of a test piece, sintered at a temperature of 1800°C when 10 wt % of _ molybdenum disulfide (MoS₂) was added, of Experimental Example 11of the sintered body of silicon nitride according to the present invention;
FIG. 13 is a photograph showing an optical microscopic representation of the structure of a test piece, sintered at a temperature of 1800°C when 5 wt % of iron sulfide (II) (FeS) was added, of Experimental Example 12 of the sintered body of silicon nitride according to the present invention;
FIG. 14 is a photograph showing an optical microscopic representation of the structure of a test piece, sintered at a temperature of 1800°C when 5 wt % of iron sulfide (FeS₂) was added, of Experimental Example 13 of the sintered body of silicon nitride according to the present invention;
FIG. 15 is a photograph showing a scanning electron microscopic representation of the structure of a test piece, sintered at a temperature of 1800°C when 0 wt % of molybdenum disulfide (MoS₂) was added, of Experimental Example 11 of the sintered body of silicon nitride according to the present invention;
FIG. 16 is a photograph showing a scanning electron microscopic representation of the structure of a test piece, sintered at a temperature of 1800°C when 1 wt % of molybdenum disulfide (MoS₂) was added, of Experimental Example 11 of the sintered body of silicon nitride according to the present invention;
FIG. 17 is a photograph showing a scanning electron microscopic representation of the structure of a test piece, sintered at a temperature of 1800°C when 5 wt % of molybdenum disulfide (MoS₂) was added, of Experimental Example 11 of the sintered body of silicon nitride according to the present invention;
FIG. 18 is a photograph showing a scanning electron microscopic representation of the structure of a test piece, sintered at a temperature of 1950°C when 0 wt % of molybdenum disulfide (MoS₂) was added, of Experimental Example 11 of the sintered body of silicon nitride according to the present invention;
FIG. 19 is a graph showing the relationship between the added amount of molybdenum disulfide (MoS₂) and the thermal conductivity of the test pieces, sintered at a temperature of 1800°C, of Experimental Example 11 of the sintered body of silicon nitride according to the present invention;
FIG. 20 is a histogram of equivalent circle diameters of the pores of the test piece, sintered at a temperature of 1800°C when 0 wt % of molybdenum disulfide (MoS₂) was added, of Experimental Example 11 of the sintered body of silicon nitride according to the present invention;
FIG. 21 is a histogram of equivalent circle diameters of the pores of the test piece, sintered at a temperature of 1800°C when 1 wt % of molybdenum disulfide (MoS₂) was added, of Experimental Example 11 of the sintered body of silicon nitride according to the present invention;
FIG. 22 is a histogram of equivalent circle diameters of the pores of the test piece, sintered at a temperature of 1800°C when 5 wt % of molybdenum disulfide (MoS₂) was added, of Experimental Example 11 of the sintered body of silicon nitride according to the present invention;
FIG. 23 is a histogram of equivalent circle diameters of the pores of the test piece, sintered at a temperature of 1950°C when 0 wt % of molybdenum disulfide (MoS₂) was added, of Experimental Example 11 of the sintered body of silicon nitride according to the present invention;
FIG. 24 is a graph showing how the relationship between the slip speed and the seizure load differs between the test pieces, sintered at a temperature of 1800°C when no molybdenum disulfide (MoS₂) was added and 5 wt % of molybdenum disulfide (MoS₂) was added, respectively, of Experimental Example 11 of the sintered body of silicon nitride according to the present invention;
FIG. 25 is a graph showing how the relationship between the slip speed and the worn volume differs between the test pieces, sintered at a temperature of 1800°C when no molybdenum disulfide (MoS₂) was added and 5 wt % of molybdenum disulfide (MoS₂) was added, respectively, of Experimental Example 11 of the sintered body of silicon nitride according to the present invention;

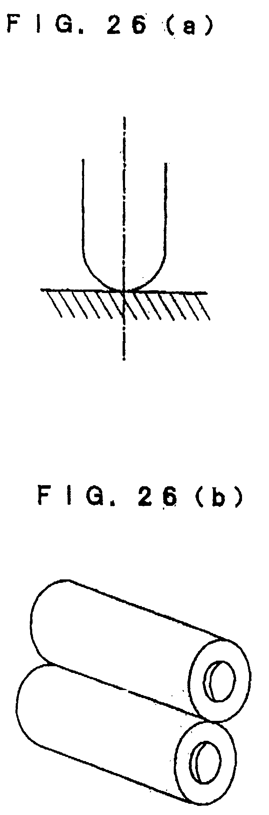

FIG. 26(a) is a schematic view showing the manner in which a plunger of a swash-plate hydraulic device is held in point-to-point sliding contact with a companion member;
FIG. 26(b) is a perspective view showing the manner in which reduction rolls are held in line-to-line sliding contact with each other;

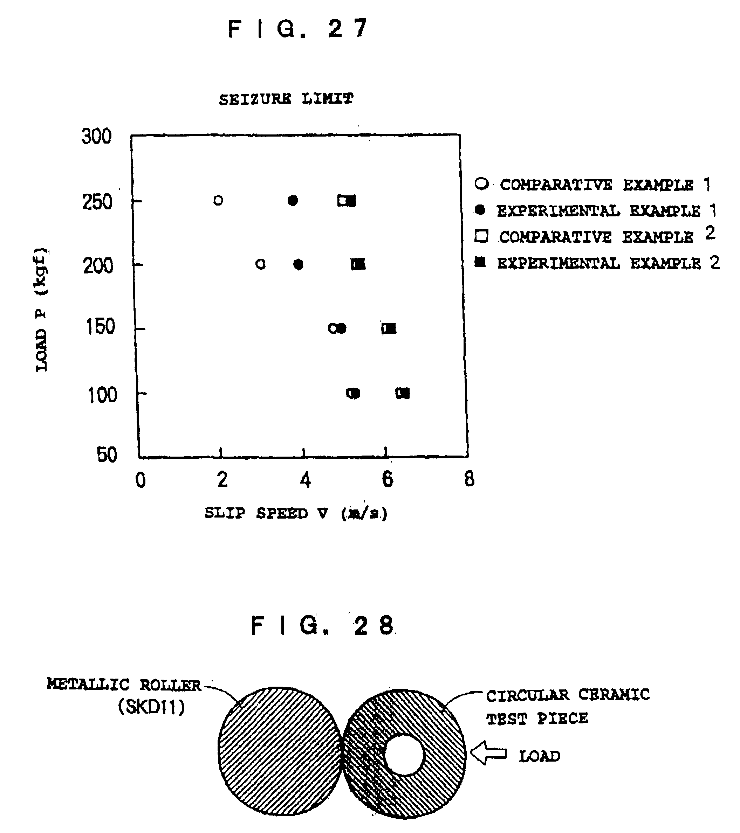

FIG. 27 is a graph showing the results of a seizure experiment conducted under different loads and at different slip speeds on Examples of a comparative sintered body silicon nitride;
FIG. 28 is a cross-sectional view of an experimenting device used in the seizure experiment; and

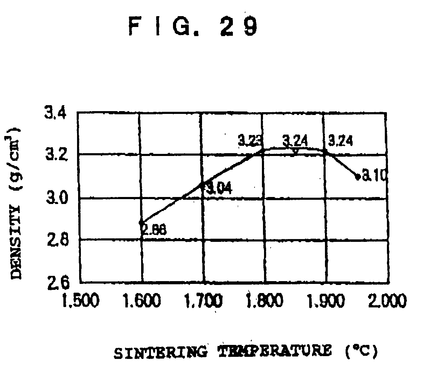

FIG. 29 is a graph showing the manner in which the density varies with respect to the sintering temperature of a sintered body according to Comparative Example 10 with no boron added in Table 16.

### Experimental Example 1 (comparative example):

5 weight % of yttrium oxide (manufactured by Japan yttrium Co.) and 3 weight % of aluminum oxide (manufactured by Sumitomo Chemical Co. Ltd.) were added as a sintering additive, and a powder of molybdenum (manufactured by Koujundo Kagaku Co. Ltd.) was also added as a metal element, to a material powder of silicon nitride (9S: manufactured by Denki Kagaku Kogyo K. K.). The powders were mixed and ground in ethanol by a ball mill. The produced slurry was dried by a rotary evaporator, and thereafter pressed by a die having a size of 35 x 55 mm under a pressure of 200 Kg/cm² and processed into a molded body by CIP under a pressure of 3 tons/cm².Using a packing coke of silicon nitride and a powder of boron nitride, the produced molded body was sintered in a temperature range of from 1600°C to 1800°C under 9 atmospheric pressures in a nitrogen atmosphere. The sintered body was then cut into a JIS piece having a size of 3 × 4 × 40 mm for property measurement, and lapped with a diamond paste into a test piece having a surface roughness of 0.8S. The test piece was measured for its contact angle by dropping a lubricating oil 10W-30 having a viscosity of 0.0146 P·S (170 cst) onto the test piece, and taking a picture of the wetted condition of the test piece with a CCD camera from the instant the drop of the lubricating oil was applied to the test piece. In order to neglect the wave phenomenon produced by the dropping of the lubricating oil, the contact angle was determined by an image analysis 1 second after the lubricating oil was dropped. The total area percentage of the separated deposit in the matrix was measured by taking a photograph of the structure with an optical microscope and analyzing the image with a computer.

Table 1, given below, shows the values of the total area percentage of the separated deposit and the contact angle under various sintering conditions.

**Table 1**

| | Added amount (wt %) | Sintering temp. (°C) | Sintering time (Hrs.) | Area pct. (%) | Contact angle (°) |
|---|---|---|---|---|---|
| Experimental Example 1 | 1 | 1700 | 4 | 2.23 | 25.9 |
| | 1 | 1800 | 4 | 3.78 | 25.4 |
| | 5 | 1800 | 4 | 15.31 | 24.8 |
| | 10 | 1800 | 4 | 22.30 | 24.7 |

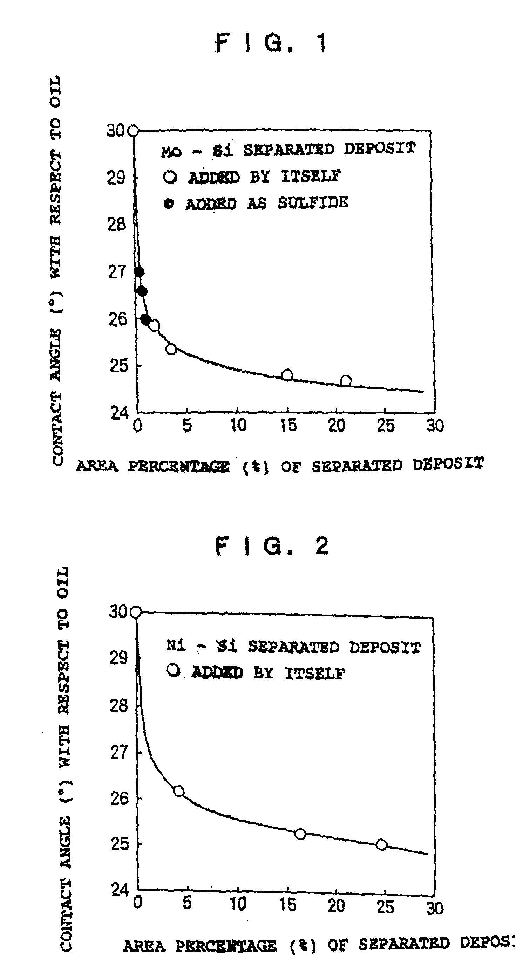

It can be seen from Table 1 that the contact angle is much smaller by adding molybdenum to silicon nitride to produce a separated deposit than when no metal element is added as indicated in Table 10, described later on, which shows the results of Comparative Examples. As the total area percentage of the separated deposit is increased, the contact angle is reduced. FIG. 1 shows the relationship between the total area percentage of the separated deposit and the contact angle as shown in Table 1. A study of FIG. 1 indicates that the size and number of particles of the separated deposit vary depending on the amount of added Mo, the sintering temperature, and the sintering time, but the contact angle is governed mainly by the total area percentage of the separated deposit. The total area percentage of the separated deposit up to 15 % has a large effect on a reduction in the contact angle. When the total area percentage of the separated deposit exceeds 15 %, its effect on a reduction in the contact angle is reduced. When the total area percentage of the separated deposit exceeds 20 %, the contact angle has substantially no dependency on the total area percentage. An analysis by an electron probe microanalyzer (EPMA) shows that the separated deposit appears to be of a mixed or single phase of molybdenum silicide. The silicon component of the separated deposit appears to be generated by the decomposition of silicon nitride.

### Experimental Example 2:

A test piece was prepared in the same manner as comparative Experimental Example 1 except that a powder of molybdenum disulfide was added instead of the powder of molybdenum.
Table 2, given below, shows the values of the total area percentage of the separated deposit and the contact angle under various sintering conditions.

**Table 2**

| | Added amount (wt %) | Sintering temp. (°C) | Sintering time (Hrs.) | Area pct. (%) | Contact angle (°) |
|---|---|---|---|---|---|
| Experimental Example 2 | 1 | 1700 | 4 | 0.38 | 27.0 |
| | 1 | 1800 | 4 | 0.85 | 26.0 |
| | 5 | 1800 | 4 | 1.15 | 26.1 |

It can be seen from Table 2 that as the total area percentage of the separated deposit increases, the contact angle decreases. As with comparative Experimental Example 1 where a powder of molybdenum was added, a separated deposit of similar composition was generated, improving the wettability, by adding a sulfide of molybdenum. FIG. 1 shows the relationship between the total area percentage of the separated deposit and the contact angle as shown in Table 2. A study of FIG. 1 indicates that the contact angle depends principally on the total area percentage of the separated deposit even if molybdenum is added in a different form.

### Experimental Example 3 (comparative example):

A test piece was prepared in the same manner as comparative Experimental Example 1 except that a powder of nickel was added as a metal element. The test piece was measured for the contact angle and the total area percentage of the separated deposit in the same manner as comparative Experimental Example 1.Table 3, given below, shows the values of the total area percentage of the separated deposit and the contact angle under various sintering conditions.

**Table 3**

| | Added amount (wt %) | Sintering temp. (°C) | Sintering time (Hrs.) | Area pct. (%) | Contact angle (°) |
|---|---|---|---|---|---|
| Experimental Example 3 | 5 | 1700 | 4 | 4.07 | 26.3 |
| | 5 | 1800 | 4 | 5.82 | 26.0 |
| | 10 | 1700 | 4 | 16.21 | 25.5 |
| | 10 | 1800 | 4 | 24.41 | 25.2 |

It can be seen from Table 3 that as the total area percentage of the separated deposit increases, the contact angle decreases. FIG. 2 shows the relationship between the total area percentage of the separated deposit and the contact angle as shown in Table 3. A study of FIG. 2 clearly indicates that the contact angle is governed principally by the total area percentage of the separated deposit. An EPMA analysis shows that the separated deposit appears to be of a mixed or single phase of nickel silicide. The silicon component of the separated deposit appears to be generated by the decomposition of silicon nitride.

### Experimental Example 4 (comparative example):

A test piece was prepared in the same manner as comparative Experimental Example 1 except that a powder of cobalt was added as a metal element. The test piece was measured for the contact angle and the total area percentage of the separated deposit in the same manner as comparative Experimental Example 1.Table 4, given below, shows the values of the total area percentage of the separated deposit and the contact angle under various sintering conditions.

**Table 4**

| | Added amount (wt %) | Sintering temp. (°C) | Sintering time (Hrs.) | Area pct. (%) | Contact angle (°) |
|---|---|---|---|---|---|
| Experimental Example 4 | 1 | 1800 | 4 | 2.02 | 26.9 |
| | 5 | 1800 | 4 | 5.61 | 25.8 |
| | 10 | 1700 | 4 | 17.79 | 25.1 |
| | 10 | 1800 | 4 | 24.66 | 25.0 |

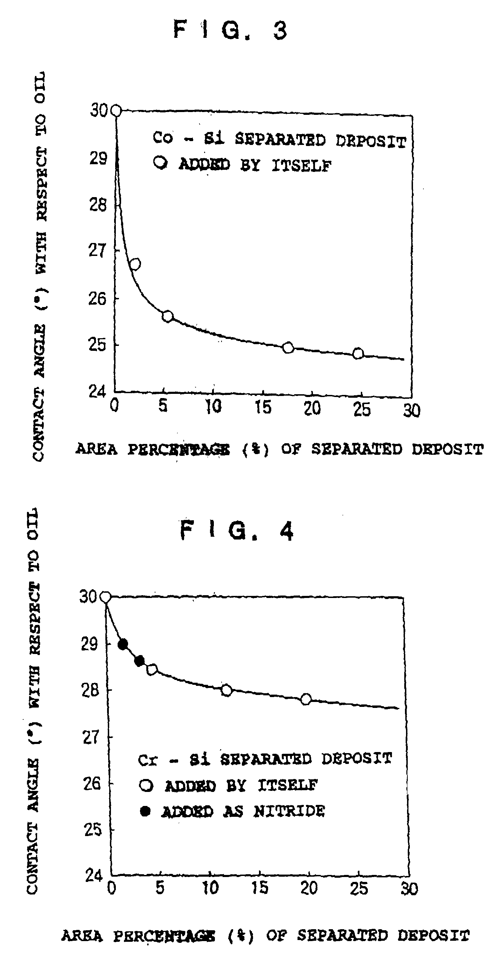

It can be seen from Table 4 that as the total area percentage of the separated deposit increases, the contact angle decreases. FIG. 3 shows the relationship between the total area percentage of the separated deposit and the contact angle as shown in Table 4. A study of FIG. 3 clearly indicates that the contact angle is governed principally by the total area percentage of the separated deposit. An EPMA analysis shows that the separated deposit appears to be of a mixed or single phase of cobalt silicide. The silicon component of the separated deposit appears to be generated by the decomposition of silicon nitride.

### Experimental Example 5 (comparative example):

A test piece was prepared in the same manner as comparative Experimental Example 1 except that a powder of chromium was added as a metal element. The test piece was measured for the contact angle and the total area percentage of the separated deposit in the same manner as Experimental Example 1. Table 5, given below, shows the values of the total area percentage of the separated deposit and the contact angle under various sintering conditions.

**Table 5**

| | Added amount (wt %) | Sintering temp. (°C) | Sintering time (Hrs.) | Area pct. (%) | Contact angle (°) |
|---|---|---|---|---|---|
| Experimental Example 5 | 5 | 1700 | 4 | 2.43 | 29.0 |
| | 5 | 1800 | 4 | 4.58 | 28.8 |
| | 10 | 1700 | 4 | 12.80 | 28.4 |
| | 10 | 1800 | 4 | 19.92 | 28.2 |

It can be seen from Table 5 that as the total area percentage of the separated deposit increases, the contact angle decreases. FIG. 4 shows the relationship between the total area percentage of the separated deposit and the contact angle at the time the powers of chromium and its nitride were added as shown in Table 5. A study of FIG. 4 clearly indicates that the contact angle is governed principally by the total area percentage of the separated deposit. An EPMA analysis shows that the separated deposit appears to be of a mixed or single phase of chromium silicide. The silicon component of the separated deposit appears to be generated by the decomposition of silicon nitride.

### Experimental Example 6 (comparative example):

A test piece was prepared in the same manner as comparative Experimental Example 1 except that a powder of manganese was added as a metal element. The test piece was measured for the contact angle and the total area percentage of the separated deposit in the same manner as comparative Experimental Example 1. Table 6, given below, shows the values of the total area percentage of the separated deposit and the contact angle under various sintering conditions.

**Table 6**

| | Added amount | Sintering temp. (wt %) | Sintering time (°C) | Area pct. (%) | Contact angle (°) |
|---|---|---|---|---|---|
| Experimental Example 6 | 5 | 1700 | 4 | 2.51 | 29.0 |
| | 5 | 1800 | 4 | 4.24 | 28.6 |
| | 10 | 1700 | 4 | 12.21 | 28.3 |
| | 10 | 1800 | 4 | 22.23 | 28.2 |

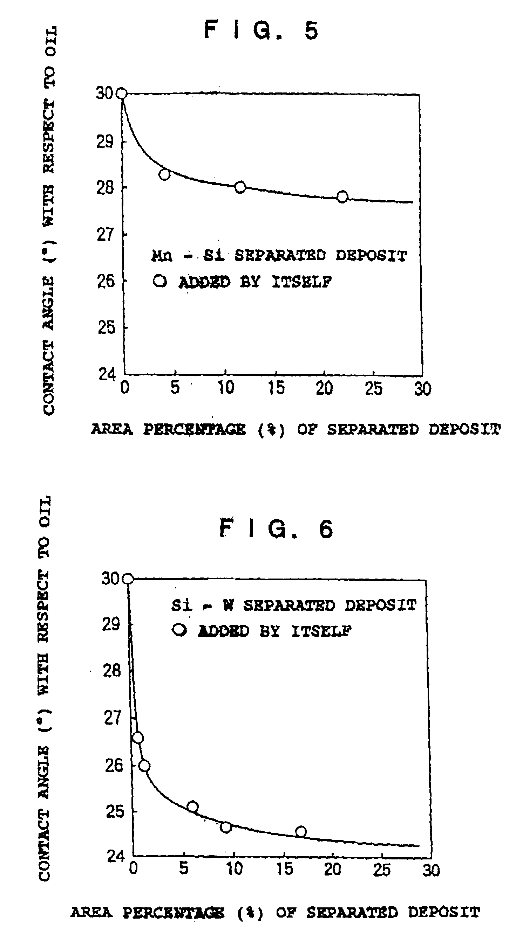

It can be seen from Table 6 that as the total area percentage of the separated deposit increases, the contact angle decreases. FIG. 5 shows the relationship between the total area percentage of the separated deposit and the contact angle as shown in Table 6. A study of FIG. 5 clearly indicates that the contact angle is governed principally by the total area percentage of the separated deposit. An EPMA analysis shows that the separated deposit appears to be of a mixed or single phase of manganese silicide. The silicon component of the separated deposit appears to be generated by the decomposition of silicon nitride.

### Experimental Example 7 (comparative example):

A test piece was prepared in the same manner as comparative Experimental Example 1 except that a powder of tungsten was added as a metal element. The test piece was measured for the contact angle and the total area percentage of the separated deposit in the same manner as comparative Experimental Example 1.Table 7, given below, shows the values of the total area percentage of the separated deposit and the contact angle under various sintering conditions.

**Table 7**

| | Added amount (wt %) | Sintering temp. (°C) | Sintering time (Hrs.) | Area pct. (%) | Contact angle (°) |
|---|---|---|---|---|---|
| Experimental Example 7 | 1 | 1700 | 4 | 0.97 | 26.7 |
| | 1 | 1700 | 4 | 1.03 | 26.0 |
| | 5 | 1700 | 4 | 6.05 | 25.2 |
| | 5 | 1800 | 4 | 9.00 | 24.8 |
| | 10 | 1800 | 4 | 16.72 | 24.7 |

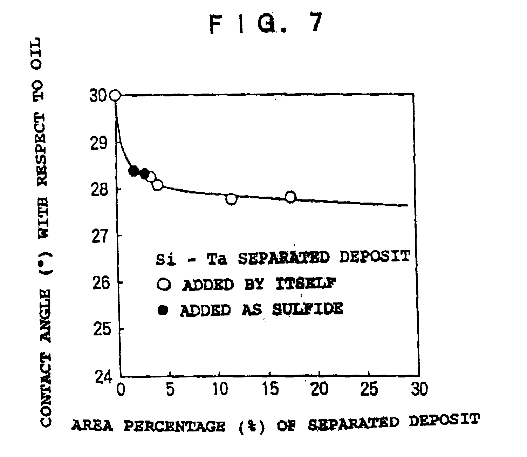

It can be seen from Table 7 that as the total area percentage of the separated deposit increases, the contact angle decreases. FIG. 6 shows the relationship between the total area percentage of the separated deposit and the contact angle as shown in Table 7. A study of FIG. 6 clearly indicates that the contact angle is governed principally by the total area percentage of the separated deposit. The separated deposit appears to be of a mixed or single phase of tungsten silicide. The silicon component of the separated deposit appears to be generated by the decomposition of silicon nitride.

### Experimental Example 8 (comparative example):

A test piece was prepared in the same manner as Experimental Example 1 except that a powder of tantalum was added as a metal element. The test piece was measured for the contact angle and the total area percentage of the separated deposit in the same manner as comparative Experimental Example 1. Table 8, given below, shows the values of the total area percentage of the separated deposit and the contact angle under various sintering conditions.

**Table 8**

| | Added amount (wt %) | Sintering temp. (°C) | Sintering time (Hrs.) | Area pct. (%) | Contact angle (°) |
|---|---|---|---|---|---|
| Experimental Example 8 | 1 | 1800 | 4 | 3.29 | 28.5 |
| | 5 | 1700 | 4 | 3.94 | 28.4 |
| | 10 | 1800 | 4 | 11.61 | 28.0 |
| | 10 | 1800 | 4 | 15.44 | 28.1 |

It can be seen from Table 8 that as the total area percentage of the separated deposit increases, the contact angle decreases. FIG. 7 shows the relationship between the total area percentage of the separated deposit and the contact angle as shown in Table 8. A study of FIG. 7 clearly indicates that the contact angle is governed principally by the total area percentage of the separated deposit. The separated deposit appears to be of a mixed phase of Ta₂Si, Ta₅Si₃(α), and TaSi₂. The silicon component of the separated deposit appears to be generated by the decomposition of silicon nitride.

### Experimental Example 9:

A test piece was prepared in the same manner as comparative Experimental Example 1 except that a powder of tantalum disulfide was added as a metal element. The test piece was measured for the contact angle and the total area percentage of the separated deposit in the same manner as comparative Experimental Example 1. Table 9, given below, shows the values of the total area percentage of the separated deposit and the contact angle under various sintering conditions.

**Table 9**

| | Added amount (wt %) | Sintering temp. (°C) | Sintering time (Hrs.) | Area pct. (%) | Contact angle (°) |
|---|---|---|---|---|---|
| Exp. Example 9 | 5 | 1700 | 4 | 1.88 | 28.4 |
| | 5 | 1800 | 4 | 2.65 | 28.5 |

It can be seen from Table 9 that as the total area percentage of the separated deposit increases, the contact angle decreases. FIG. 7 shows the relationship between the total area percentage of the separated deposit and the contact angle as shown in Table 9. A study of FIG. 7 indicates that the contact angle depends principally on the total area percentage of the separated deposit even if tantalum is added in a different form. As when tantalum was added, the separated deposit appears to be of a mixed phase of Ta₂Si, Ta₅Si₃(α), and TaSi₂. The silicon component of the separated deposit appears to be generated by the decomposition of silicon nitride.

### Comparative Example 10:

A test piece was prepared in the same manner as Experimental Example 1 except that no powder of molybdenum was added. The test piece was measured for the contact angle in the same manner as comparative Experimental Example 1. Table 10, given below, shows the value of the contact angle.

**Table 10**

| | Sintering temp. (°C) | Sintering time (Hrs.) | Area pct. (%) | Contact angle (°) |
|---|---|---|---|---|
| Com. Ex. | 1800 | 4 | 0 | 29.9 |

It can be seen from Table 10 that the contact angle is much greater than when a metal element and/or its sulfide or nitride was not added.

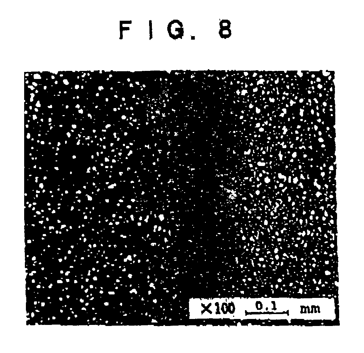

FIG. 8 is a photograph showing an optical microscopic representation of the granular structure of the test piece of comparative Experimental Example I described above. The surface of the test piece was lapped with a diamond paste. The photograph was taken at a magnification ratio of 100. It can be seen from FIG. 8 that the separated deposit is finely dispersed in the ceramic of the matrix. Those regions which look white are composed of the separated deposit, and those regions which look black are composed of pores. The separated deposit is believed to contribute to the increased wettability.

Since the comparative sintered body of silicon nitride has the separated deposit separated out in the matrix, the separated deposit having good wettability by lubricating oil, the sintered body of silicon nitride exhibits good wettability by lubricating oil. Inasmuch as the separated deposit is very finely dispersed, it allows lubricating oil to spread uniformly over a sliding surface of the sintered body and keeps the lubricating oil retained in the sliding surface. When the sintered body of silicon nitride is used in fluid-lubricated environments, therefore, it has a low coefficient of friction, is subject to low wear, and has high seizure limits. Because the separated deposit is generated by reaction sintering between the ceramic powder and the metal element in the matrix, the separated deposit is firmly bonded to the matrix against removal, making the sintered body of silicon nitride highly durable.

The separated deposit in the matrix, which has a substantially circular cross-sectional shape, is unlikely to serve as a spot to start breaking the sintered body of silicon nitride, which is thus prevented from suffering a reduction in the strength. The sintered body of silicon nitride is also prevented from suffering a reduction in the strength because the separated deposit is finely and uniformly dispersed and its maximum diameter is 30 µm or less. The separated deposit whose total area percentage ranges from 0.1 to 30 weight permits the sintered body of silicon nitride to have sufficient wettability by lubricating oil and sufficient strength when it is used as a structural member. While generally known sintered bodies of silicon nitride have a contact angle of 30° or greater, the sintered body of silicon nitride for use as a sliding member has a contact angle ranging from 24° to 29° and hence excellent sliding characteristics. Since general metallic materials for use as sliding materials have a contact angle ranging from 25° to 26°, the ceramic material has wettability comparable to that of the metallic materials, and is very useful for use in fluid-lubricated environments.

A sintered body of silicon nitride for use as a sliding member according to the present invention will be described below.

The sintered body of silicon nitride according to the present invention is aimed at an increased heat insulating capability so that it can be used as a material of a heat-insulated ceramic engine. According to the present invention, there is provided particularly a sintered body of silicon nitride for use as a sliding member, whose heat insulating capability is increased by positively utilizing pores produced in the sintered body, and which has increased seizure resistance and wear resistance, a low coefficient of friction, a good ability to retain lubricating oil, increased tenacity, and high strength.

In order to increase the heat insulating capability of the sintered body of silicon nitride for use as a sliding member, the structure of the sintered body of silicon nitride has minute pores.

There has been known no prior art which would disclose a sufficient research basis for measuring and setting the area percentage of the pores in a sintered body of silicon nitride to an appropriate value for the purpose of increasing the heat insulating capability of the sintered body of silicon nitride. There also has not been known a sufficient study with respect to the size and distribution of pores effective to increase the heat insulating capability of a sintered body of silicon nitride. Rather, it has heretofore been considered that almost no pores should be present in a sintered body of silicon nitride for use as a sliding member as they would serve as a spot to start breaking the sintered body of silicon nitride and hence would lower the strength thereof. However, if any pores in a sintered body of silicon nitride for use as a sliding member are minimized in number for increasing the strength thereof, then the thermal conductivity of the sintered body of silicon nitride will be increased, a condition which is not preferable for increasing the heat insulating capability of the sintered body of silicon nitride.

The sintered body of silicon nitride according to the present invention has been achieved in view of the fact that while coarse or large pores reduce the strength of the sintered body, minute pores do not greatly reduce the strength of the sintered body.

The sintered body of silicon nitride according to the present invention is produced by sintering a mixed powder composed of a sulfide of a transition metal, a silicon-nitride-based powder, and a sintering additive, with minute pores, minute acicular silicon nitride and a silicide of a transition metal being uniformly dispersed in at least the surface of the sintered body of silicon nitride.

The transition metal should preferably be molybdenum or iron.

The ceramic powder should be silicon nitride or sialon (Si-Al-O-N) as it is required to have excellent strength, tenacity, and wear resistance in an application for use as a structural member.

The transition metal added as a sulfide should preferably be molybdenum, iron, nickel, cobalt, chromium, manganese, tungsten, tantalum, or the like which generates a metal silicide having good wettability by lubricating oil due to reaction sintering with the ceramic component in the matrix. More preferably, the transition metal should be molybdenum or iron. However, the metal element is not limited to these elements, but may be any of various other elements insofar as it can produce a lipophilic separated deposit in the sintering process. Two or more of these metal elements may be added simultaneously.

In particular, FeS and MoS₂ are preferable as they are effective to increase the density of the sintered body.

Since the ceramic powder is difficult to be sintered by itself, a sintering additive is usually needed to sinter the ceramic powder into a structural member. The sintering additive should preferably be selected from the group consisting of yttrium oxide, aluminum oxide, magnesium oxide, cerium oxide, neodymium oxide, lanthanum oxide, ytterbium oxide, strontium oxide, and titanium oxide. One of these sintering additive materials may be added or a plurality of them may be added simultaneously. Particularly, it is preferable to add aluminum oxide and yttrium oxide to silicon nitride. The total amount of an added sintering additive should preferably be in the range of from 1 to 12 weight %.

In the process of sintering a mixed powder composed of a sulfide of a transition metal, a silicon-nitride-based powder, and a sintering additive, a metal silicide generated by a reaction between a metal element from the sulfide of the transition metal and Si atoms from the dissociation of silicon nitride is finely and uniformly dispersed in the surface of the sintered body of silicon nitride according to the the present invention, and countless micropores having a diameter of the order of several µm are present in the surface of the sintered body of silicon nitride. Furthermore, minute acicular silicon nitride is also uniformly dispersed. Although the acicular silicon nitride is usually generated only upon sintering at considerably high temperatures, it can be generated at relatively low temperatures by adding a sulfide of a transition metal according to the second embodiment.

The sintered body of silicon nitride according to the second embodiment can be molded by injection molding, slip casting, pressing, and cold isostatic pressing (CIP). However, hot pressing is more preferable in order to produce a highly dense sintered body. Since sintered bodies that can be produced by hot pressing are limited to simple shapes and are highly expensive, it is usually preferable to mold a sintered body of silicon nitride by pressing and thereafter CIP. The present invention is, however, not limited to these processes.

Experimental examples of the sintered body of silicon nitride according to the present invention will be described in detail below.

### Experimental Example 11:

5 weight % of yttrium oxide (manufactured by Japan yttrium Co. Ltd.) and 3 weight % of aluminum oxide (manufactured by Sumitomo Chemical Co. Ltd.) were added as a sintering additive, and a powder of molybdenum disulfide (MoS₂) (manufactured by Koujundo Kagaku Co. Ltd.) was also added as a sulfide of a transition metal, to a material powder of silicon nitride (9S: manufactured by Denki Kagaku Kogyo K. K.). The powders were mixed and ground in ethanol by a ball mill. The produced slurry was dried by a rotary evaporator, and thereafter pressed by a die having a size of 35 × 55 mm under a pressure of 200 Kg/cm² and processed into molded bodies by CIP under a pressure of 3 tons/cm². Using a packing coke of silicon nitride and a powder of boron nitride, the produced molded bodies were sintered respectively at temperatures of 1800°C and 1950°C under 9 atmospheric pressures in a nitrogen atmosphere for four hours. The sintered bodies were then cut into JIS pieces each having a size of 3 × 4 × 40 mm for property measurement, and lapped with a diamond paste into test pieces each having a surface roughness of 0.8S.

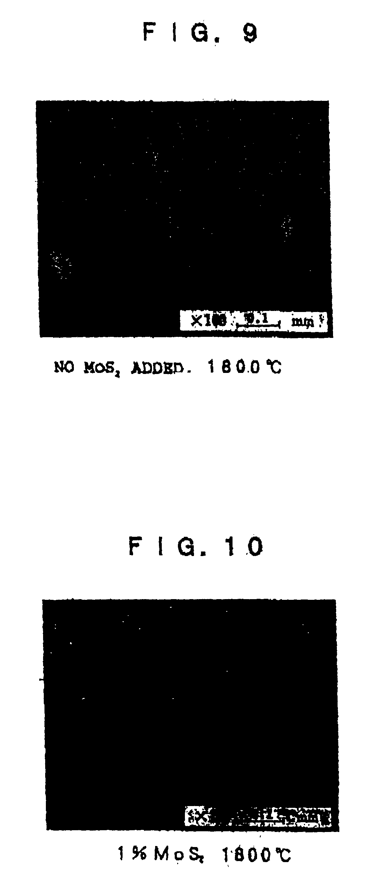

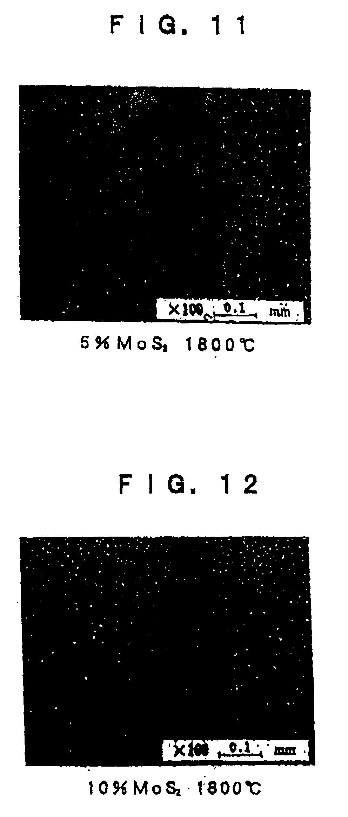

FIGS. 9 through 12 are photographs of optical microscopic representations of the structures of the test pieces, sintered at a temperature of 1800°C with different amounts of molybdenum disulfide (MoS₂) added, of Experimental Example 11 of the sintered body of silicon nitride according to the present invention. The surfaces of the test pieces were lapped with a diamond paste. The photographs were taken at a magnification ratio of 100. It can be seen from FIGS. 9 through 12 that more minute pores are present in the ceramic of the matrix as more molybdenum disulfide (MoS₂) is added, and that a silicide of molybdenum (separated deposit) appears in the ceramic of the matrix. In Experimental Example 11, more minute pores and more minute molybdenum disulfide (separated deposit) are dispersed in the ceramic of the matrix in substantial proportion to the added amount of molybdenum disulfide. Those regions which look black are composed of pores, and those regions which look white are composed of the separated deposit. The separated deposit is believed to contribute to the increased wettability.

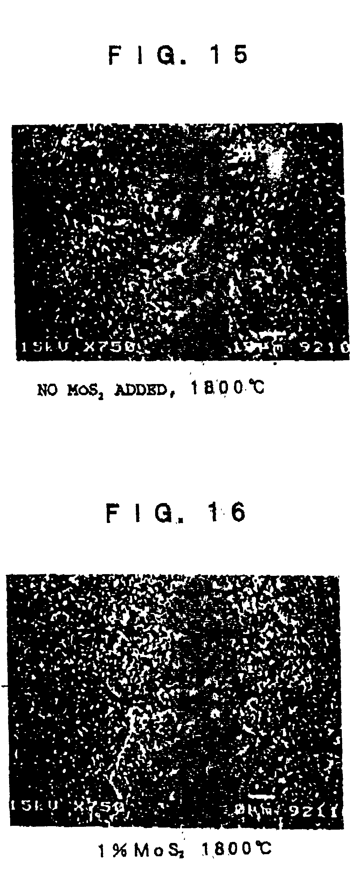

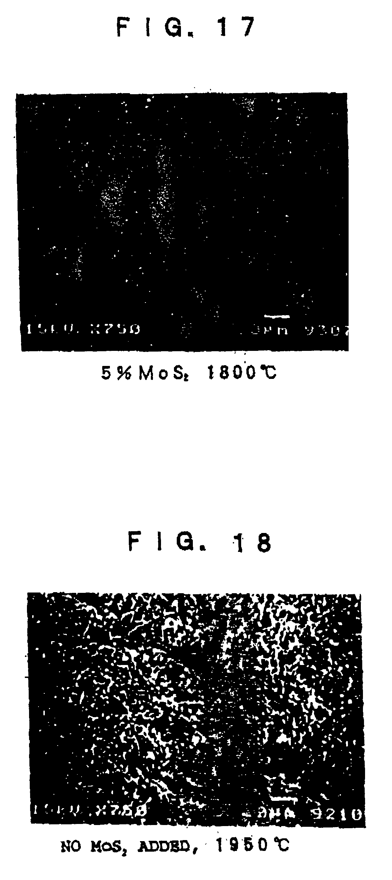

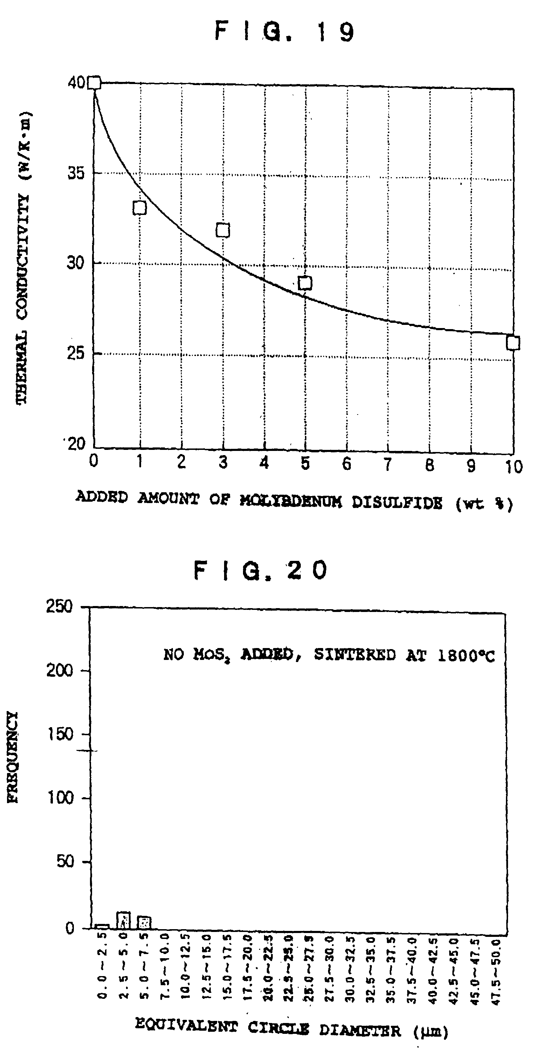

FIGS. 15 through 18 are photographs of optical microscopic representations of the structures of the test pieces, sintered at temperatures of 1800°C and 1950°C with different amounts of molybdenum disulfide (MoS₂) added, of Experimental Example 11 of the sintered body of silicon nitride according the present invention. The surfaces of the test pieces were lapped with a diamond paste. The photographs were taken at a magnification ratio of 750. It can be seen from FIGS. 15 through 18 that columnar or acicular crystals of silicon nitride are developed by the addition of a sulfide of molybdenum. As the amount of the added sulfide of molybdenum increases, the columnar or acicular crystals of silicon nitride are developed to a greater degree. Generally, when the sintering temperature is increased, e.g., when the molded body is sintered at 1950°C, columnar crystals of silicon nitride are developed, but the internal structure is rendered coarse, resulting in a greater porosity as shown in FIG. 18. As the porosity increases, i.e., as greater pores are produced, the strength of the sintered body of silicon nitride decreases. According to the second embodiment, the sintering temperature is lowered to develop columnar crystals for increasing the tenacity of the sintered body of silicon nitride.

The test pieces, sintered at a temperature of 1800°C, of Experimental Example 11 were measured for thermal conductivity.

Structure photographs of these test pieces were taken through an optical microscope, and their images were analyzed by a computer to measure a distribution of the sizes of minute pores dispersed in the ceramic of the matrix and the total area percentages of the pores.

Table 11, given below, shows the values of the thermal conductivity and pore area percentage of the test pieces sintered under various conditions:

**Table 11**

| Experimental Example 11 | Thermal conductivity (W/(m·K)) | Pore area percentage (%) |
|---|---|---|
| No MoS₂ added | 39.5 | 0.47 |
| 1 wt. % MoS₂ added | 32.9 | 7.56 |
| 5 wt. % MoS₂ added | 29.0 | 13.86 |
| 10 wt. % MoS₂ added | 25.7 | 15.58 |

It can be seen from Table 11 that the thermal conductivity is much smaller when molybdenum disulfide (MoS₂) is added than when no molybdenum disulfide (MoS₂) is added. At the same sintering temperature, the pore area percentage increases and the thermal conductivity decreases depending on the added amount of molybdenum disulfide (MoS₂).

FIG. 19 is a graph showing the relationship between the added amount of molybdenum disulfide (MoS₂) and the thermal conductivity of the test pieces as shown in Table 11. A study of FIG. 19 indicates that the thermal conductivity is governed by the added amount of molybdenum disulfide. The effect which the added amount of molybdenum disulfide has on a reduction in the thermal conductivity is great if the added amount of molybdenum disulfide is up to 1 weight %, but becomes smaller if the added amount of molybdenum disulfide exceeds 5 weight %. If the added amount of molybdenum disulfide exceeds 8 weight %, the thermal conductivity essentially does not depend on the added amount of molybdenum disulfide. The reduction of the thermal conductivity caused by the addition of molybdenum disulfide indicates that the addition of molybdenum disulfide is effective to increase the heat insulating capability of the sintered body of silicon nitride.

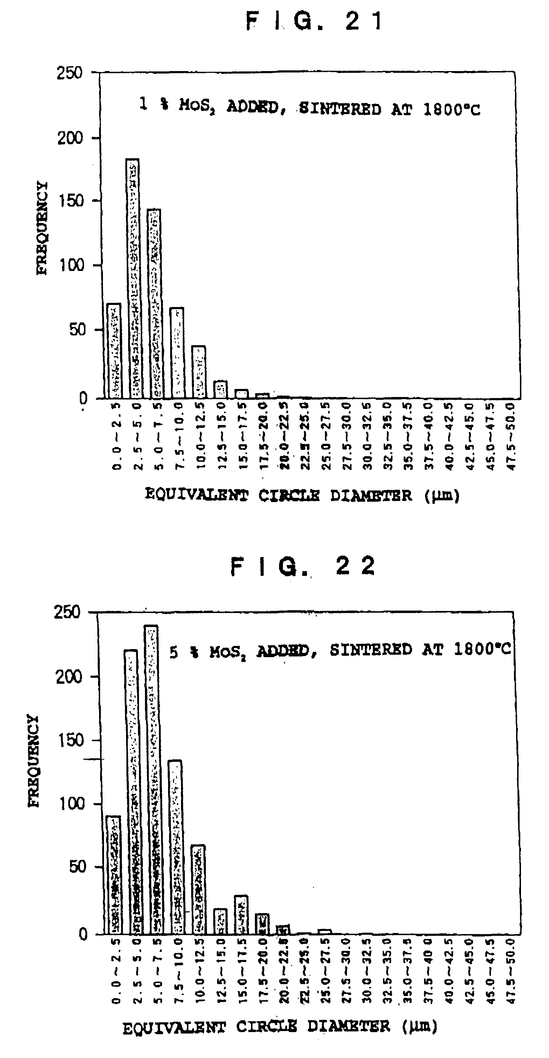

FIGS. 20 through 22 are histograms of equivalent circle diameters of pores at various amounts of molybdenum disulfide (MoS₂). The equivalent circle diameters are diameters of circles having the same areas as pores of various configurations. It can easily be understood from FIGS. 20 through 22 that pores having a diameter of the order of several µm increase in number depending on the added amount of molybdenum disulfide (MoS₂). An increased number of pores having a diameter of the order of several µm is effective in preventing the strength from being lowered and increasing the heat insulating capability of the sintered body of silicon nitride.

The test pieces of Experimental Example 11 which were sintered at a temperature of 1950°C with no molybdenum disulfide (MoS₂) added and sintered at a temperature of 1800°C with 5 weight % of molybdenum disulfide (MoS₂) added were measured for thermal conductivity, distribution of pore sizes, total area percentage of pores, and bending strength. The thermal conductivity, the distribution of pore sizes, the total area percentage of pores were measured in the same manner as with Table 1 and FIGS. 20 through 22.

Table 12, given below, shows the values of the thermal conductivity, the total area percentage of pores, and the bending strength of the test pieces sintered under the above two conditions.

**Table 12**

| Exp. Ex. 11 | Sintering temp. (°C) | Thermal conductivity (W/(m·K)) | Total area percentage of pores (%) | Bending strength (MPa) |
|---|---|---|---|---|
| No MoS₂ added | 1950 | 39.3 | 16.11 | 527 |
| 5 wt. % MoS₂ added | 1800 | 29.0 | 13.86 | 778 |

It can be understood from Table 12 that, as with Table 11, the thermal conductivity is much smaller when molybdenum disulfide (MoS₂) is added than when no molybdenum disulfide (HoS₂) is added. In Table 12, however, the total area percentage of pores does not increase depending on the added amount of molybdenum disulfide (MoS₂). Rather, the total area percentage of pores is greater when no molybdenum disulfide (MoS₂) is added than when molybdenum disulfide (MoS₂) is added. This is believed to be caused by the different sintering temperatures.

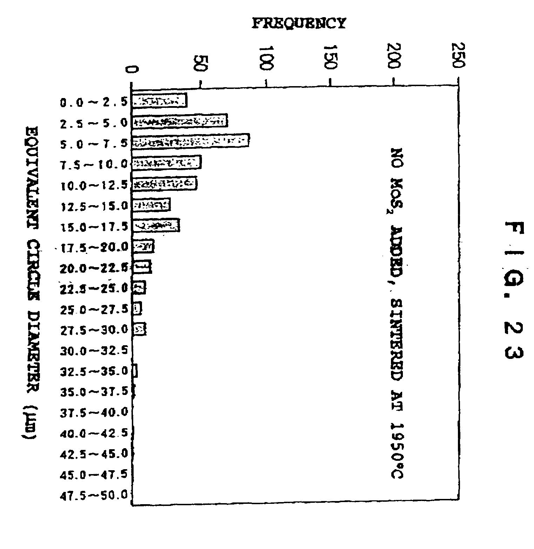

FIG. 23 is a histogram of equivalent circle diameters of pores produced when the molded body was sintered at 1950°C with no molybdenum disulfide (MoS₂) added. A comparison between the histogram shown in FIG. 23 and the histogram shown in FIG. 22 of equivalent circle diameters of pores produced when the molded body was sintered at 1800°C with 5 weight % of molybdenum disulfide (MoS₂) added, indicates that the frequency of pores having a diameter of the order of several µm shown in FIG. 23 is reduced to about 1/3 of the frequency of pores shown in FIG. 22, and the frequency of pores having a diameter of several tens µm or greater shown in FIG. 23 is increased by about 25 % of the frequency of pores shown in FIG. 22. This signifies that the frequency of pores having a diameter of the order of several tens µm or greater shown in FIG. 23 is greater than the frequency of pores having a diameter of the order of several µm shown in FIG. 2. Specifically, while there are considerably many minute pores (having a diameter of the order of several µm) in FIG. 22, there are some large pores (having a diameter of the order of several tens µm or greater) in FIG. 23. That is, many minute pores are dispersed in FIG. 22, and a few large pores are present in FIG. 23.

As shown in Table 12, the bending strength is greater when 5 weight % of molybdenum disulfide (MoS₂) is added than when no molybdenum disulfide (MoS₂) is added. Since the total area percentage of pores remains to be over ten % irrespective of whether molybdenum disulfide (MoS₂) is added or not, the total area percentage of pores alone does not appear to affect the bending strength. Rather, the size and number of pores are believed to affect the bending strength. When molybdenum disulfide is added, there are considerably many minute pores (having a diameter of the order of several µm), which do not greatly affect the bending strength. When no molybdenum disulfide is added, there are some large pores (having a diameter of the order of several tens µm or greater), which appear to affect the bending strength. It can therefore be understood that the bending strength is lowered when more large pores (having a diameter of the order of several tens µm or greater) are present. When molybdenum disulfide is added, the bending strength is increased because large pores are few though many minute pores are present.

As shown in Table 12, the thermal conductivity is smaller when 5 weight of molybdenum disulfide (MoS₂) is added than when no molybdenum disulfide (MoS₂) is added. Since the total area percentage of pores remains to be over ten % irrespective of whether molybdenum disulfide (MoS₂) is added or not, the total area percentage of pores alone does not appear to affect the thermal conductivity. Rather, the size and number of pores are believed to affect the thermal conductivity. When molybdenum disulfide is added, there are considerably many minute pores (having a diameter of the order of several µm), which appear to affect the thermal conductivity. When no molybdenum disulfide is added, there are some large pores (having a diameter of the order of several tens µm or greater), which do not affect the thermal conductivity. It can therefore be understood that the thermal conductivity is lowered when more minute pores (having a diameter of the order of several µm) are present. When molybdenum disulfide is added, the thermal conductivity is decreased because many minute pores are present. An increased number of pores having a diameter of the order of several µm increases the heat insulating capability of the sintered body of silicon nitride.

Point-to-point contact seizure and wear tests were conducted on the test pieces of Experimental Example 11 by a pinion-disk frictional wear testing machine. The test pieces were in the form of rods made of silicon nitride ceramic with no molybdenum disulfide (MoS₂) added and silicon nitride ceramic with 5 weight % of molybdenum disulfide (MoS₂) added. Disks used were made of bearing steel in all the tests. The test pieces were measured for the load P upon seizure and the coefficient µ of friction in the atmosphere when the load was increased at a rate of 10 kg/min. and the slip speed varied from 1 to 15 m/s. The lubricating oil used was Honda Ultra U10W-30, and applied to the disks before the tests in order to prevent initial localized abutment with subsequent oil supply cut off. In this manner, oil film interruptions which will be experienced on high-speed sliding members under high pressures were intentionally produced to evaluate the test pieces for toughness against such oil film interruptions. Amounts of wear on the tested test pieces were calculated from an image analysis of optical microscopic photographs of the tested test pieces, and then evaluated.

Table 13, given below, shows the values of the seizure load and worn volume of the test pieces with no molybdenum disulfide (MoS₂) added and 5 weight of molybdenum disulfide (MoS₂) added.

**Table 13**

| Slip speed (m/s) | | 2 | 3 | 5 | 7 | 10 | 15 |
|---|---|---|---|---|---|---|---|
| No MoS₂ added | Seizure load(kg) | 150.0 | 83.7 | 46.2 | 40.3 | 18.6 | 16.8 |
| | Worn vol.(mm²) | 0.0552 | 0.0423 | 0.0255 | 0.0210 | 0.0046 | 0.0011 |
| 5 wt. % MoS₂ added | Seizure load(kg) | 153.6 | 133.7 | 67.2 | 51.6 | 21.6 | 17.2 |
| | Worn vol.(mm²) | 0.0286 | 0.0249 | 0.0145 | 0.0097 | 0.0015 | 0.0008 |

It can be seen from Table 13 that the seizure load is greater and the worn volume is smaller when molybdenum disulfide (MoS₂) is added than when no molybdenum disulfide (MoS₂) is added.

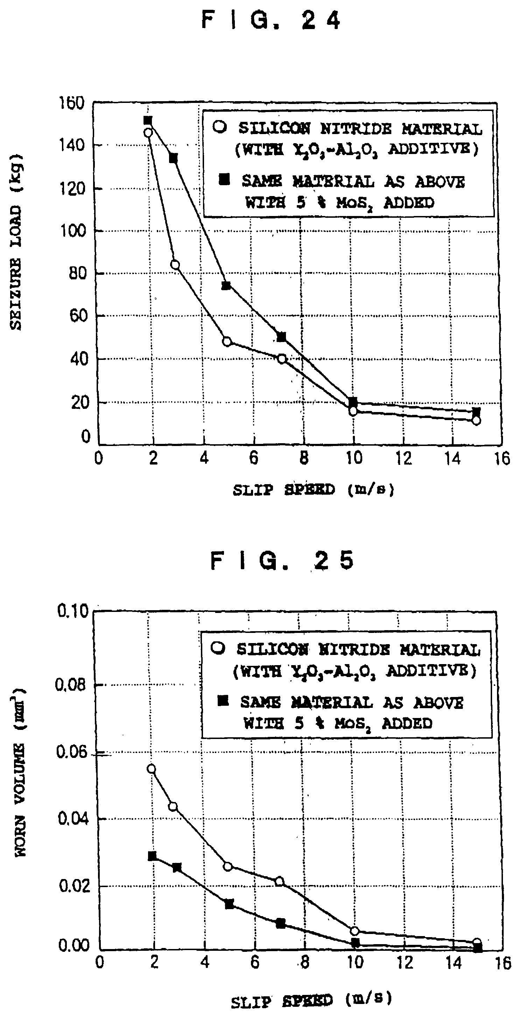

FIG. 24 shows how the relationship between the slip speed and the seizure load differs between the test pieces with no molybdenum disulfide (MoS₂) added and 5 wt % of molybdenum disulfide (MoS₂) added as shown in Table 13. In FIG. 24, the seizure load of the silicon nitride ceramic with 5 wt % of molybdenum disulfide (MoS₂) added is greater than the seizure load of the silicon nitride ceramic with no molybdenum disulfide (MoS₂) added at any of the slid speeds. This indicates that the addition of 5 wt % of molybdenum disulfide (MoS₂) increased the seizure resistance of the silicon nitride ceramic.

FIG. 25 shows how the relationship between the slip speed and the worn volume differs between the test pieces with no molybdenum disulfide (MoS₂) added and 5 wt % of molybdenum disulfide (MoS₂) added as shown in Table 13. In FIG. 25, the worn volume of the silicon nitride ceramic with 5 wt % of molybdenum disulfide (MoS₂) added is smaller than the seizure load of the silicon nitride ceramic with no molybdenum disulfide (MoS₂) added at any of the slid speeds. This indicates that the addition of 5 wt % of molybdenum disulfide (MoS₂) increased the wear resistance of the silicon nitride ceramic.

The above results show that the addition of 5 wt % of molybdenum disulfide (MoS₂) produced countless micropores in a sliding surface of the silicon nitride ceramic and the metal silicide finely separated out on the sliding surface increased a lipophilic capability, making the silicon nitride ceramic highly resistant to seizure and wear.

The effect of the addition of 5 wt % of molybdenum disulfide (MoS₂) manifests itself in a low speed range and a high load range. The sliding characteristics of the silicon nitride ceramic can further be improved when a low-viscosity lubricant is used.

### Experimental Example 12:

Test pieces were prepared in the same manner as Experimental Example 11except that a powder of iron sulfide (II) (FeS) was added instead of the powder of molybdenum disulfide (MoS₂).

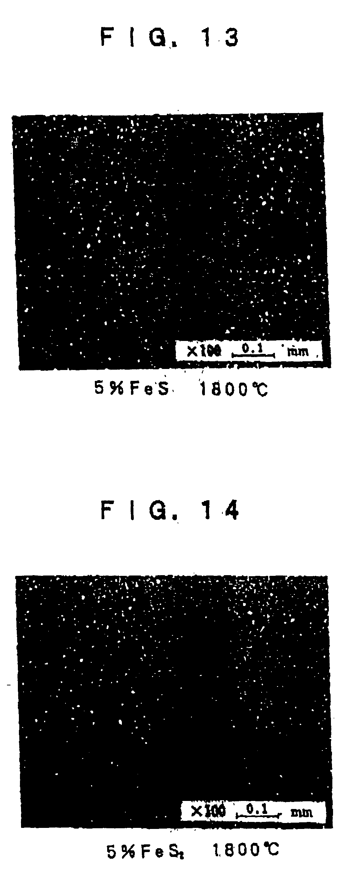

FIG. 13 is a photograph of an optical microscopic representation of the structure of the test piece, sintered at a temperature of 1800°C with 5 weight % of iron sulfide (II) (FeS) added, of Experimental Example 12. The surface of the test piece was lapped with a diamond paste. The photograph was taken at a magnification ratio of 100. It can be seen from FIG. 13 that, as with Experimental Example 11 in which the powder of molybdenum disulfide (MoS₂) was added, more minute pores are present in the ceramic of the matrix as iron sulfide (II) (FeS) is added, and that a silicide of iron (separated deposit) appears in the ceramic of the matrix. Those regions which look black are composed of pores, and those regions which look white are composed of the separated deposit. The separated deposit is believed to contribute to the increased wettability.

The test pieces, sintered at a temperature of 1800°C, of Experimental Example 12 were measured for thermal conductivity in the same manner as Experimental Example 1.

Structure photographs of these test pieces were taken through an optical microscope, and their images were analyzed by a computer to measure a distribution of the sizes of minute pores dispersed in the ceramic of the matrix and the total area percentages of the pores.

Table 14, given below, shows the values of the thermal conductivity and pore area percentage of the test pieces sintered under various conditions:

**Table 14**

| Experimental Example 2 | Thermal conductivity (W/m·K)) | Pore area percentage (%) |
|---|---|---|
| No FeS added | 39.5 | 0.47 |
| 5 wt. % FeS added | 24.2 | 10.13 |

It can be seen from Table 14 that the thermal conductivity is much smaller when iron sulfide (II) (FeS) is added than when no iron sulfide (II) (FeS) is added. The thermal conductivity is lowered as the total area percentage of the pores is increased.

The thermal conductivity of the test piece of Experimental Example 12 with 5 weight % of iron sulfide (II) (FeS) added was 24.2 (W/(m·K)).

The distribution of the sizes of pores of the test pieces of Experimental Example 12, which were not measured, appears to be similar to the distribution in Experimental Example 11.

### Experimental Example 13:

Test pieces were prepared in the same manner as Experimental Example 11 except that a powder of iron sulfide (FeS₂) was added instead of the powder of molybdenum disulfide (MoS₂).

FIG. 14 is a photograph of an optical microscopic representation of the structure of the test piece, sintered at a temperature of 1800°C with 5 weight % of iron sulfide (FeS₂) added, of Experimental Example 13. The surface of the test piece was lapped with a diamond paste. The photograph was taken at a magnification ratio of 100. It can be seen from FIG. 14 that, as with Experimental Example 11 in which the powder of molybdenum disulfide (MoS₂) was added, more minute pores are present in the ceramic of the matrix as iron sulfide (FeS₂) is added, and that a silicide of iron (separated deposit) appears in the ceramic of the matrix. Those regions which look black are composed of pores, and those regions which look white are composed of the separated deposit. The separated deposit is believed to contribute to the increased wettability.

The test pieces, sintered at a temperature of 1800°C, of Experimental Example 13 were measured for thermal conductivity in the same manner as Experimental Example 11.

Structure photographs of these test pieces were taken through an optical microscope, and their images were analyzed by a computer to measure a distribution of the sizes of minute pores dispersed in the ceramic of the matrix and the total area percentages of the pores.

Table 15, given below, shows the values of the thermal conductivity and pore area percentage of the test pieces sintered under various conditions:

**Table 15**

| Experimental Example 3 | Thermal conductivity (W/m·K)) | Pore area percentage (%) |
|---|---|---|
| No FeS₂ added | 39.5 | 0.47 |
| 5 wt. % FeS₂ added | 24.3 | 13.86 |

It can be seen from Table 15 that the thermal conductivity is much smaller when iron sulfide (FeS₂) is added than when no iron sulfide (FeS₂) is added. The thermal conductivity is lowered as the total area percentage of the pores is increased.

The thermal conductivity of the test piece of Experimental Example 13 with 5 weight % of iron sulfide (FeS₂) added was 24.3 (W/(m·K)).

The distribution of the sizes of pores of the test pieces of Experimental Example 13, which were not measured, appears to be similar to the distribution in Experimental Example 11.

The sintered body of silicon nitride according to the present invention offers the following various advantages:

The sintered body of silicon nitride according to the present invention has increased tenacity because minute acicular crystals are uniformly dispersed in a mass of silicon nitride which constitutes a matrix.

The wettability by a liquid lubricant of the sintered body of silicon nitride according to the present invention is increased since a metal silicide (separated deposit) is finely separated out in the ceramic of the matrix and the separated deposit has good affinity for the liquid lubricant. Inasmuch as the separated deposit is very finely dispersed, it allows the liquid lubricant to spread uniformly over a sliding surface of the sintered body and keeps the liquid lubricant retained in the sliding surface. The countless micropores present in the surface of the sintered body are likely to keep liquid lubricant retained in the sliding surface. Therefore, the coefficient of friction of the sintered body of silicon nitride according to the present invention is lowered when used in fluid-lubricated environments.

Furthermore, the countless micropores produced in the sliding surface of the sintered body of silicon nitride according to the present invention and the increased affinity for the lubricant of the metal silicide finely separated out on the sliding surface of the sintered body make the sintered body of silicon nitride highly resistant to seizure and wear.

Furthermore, the pores of the sintered body of silicon nitride according to the present invention are controlled by the sintering process and the sintering additive, and the sintered body is free of excessively large pores. Pores tend to be produced and increased in size when the molded body is sintered at a high temperature, and large pores are liable to reduce the strength of the sintered body. Since the pores dispersed in the surface of the sintered body of silicon nitride are minute pores, they will not reduce the strength of the sintered body. Therefore, when the sintered body of silicon nitride is used in fluid-lubricated environments, it has a low coefficient of friction, is worn slowly, and has a high seizure limit.

The countless micropores present in the sliding surface of the sintered body of silicon nitride according to the present invention are effective to reduce the thermal conductivity of the sintered body and increase the heat insulating capability thereof.

Since the sintered body of silicon nitride is produced by sintering a powder of silicon nitride with a sulfide of a transition metal added thereto, the bonding between a metal silicide which contributes to increased sliding characteristics and the boundaries of silicon nitride particles which form the matrix is so firm that the metal silicide will not be removed in use, making the sintered body highly durable. Therefore, the sintered body of silicon nitride according to the present invention suffers little reduction in the strength which would otherwise generally occur if an additive (impurity) were introduced.

## Claims

1. A sintered body of silicon nitride for use as a sliding member in fluid-lubricated environments, produced by sintering a mixed powder composed of a sulfide of a transition metal, a silicon-nitride-based powder and a sintering additive, the sintered body formed with minute pores, minute acicular silicon nitride and a silicide of said transition metal being uniformly dispersed in at least the surface of the sintered body of silicon nitride, said sintered body having a thermal conductivity less than 32.9 W/(m·K) and pore area percentage of more than 7.56 %.

2. A sintered body as claimed in claim 1,
**wherein**
said transition metal includes Fe.

3. A sintered body as claimed in claim 1,
**wherein**
said transition metal includes Mo.

## Patentansprüche

1. Siliziumnitrid-Sinterkörper zur Verwendung als ein Gleitelement in fluidgeschmierten Umgebungen, hergestellt durch Sintern eines Pulvergemisches, zusammengesetzt aus einem Sulfid eines Übergangsmetalls, einem Pulver auf Basis von Siliziumnitrid, und einem Sinteradditiv, wobei der Sinterkörper derart gebildet ist, so daß feine Poren, feines azikuläres Siliziumnitrid und ein Silicid des Übergangsmetalls in mindestens der Oberfläche des Siliziumnitrid-Sinterkörpers gleichförmig dispergiert sind, wobei der Sinterkörper eine Wärmeleitfähigkeit von weniger als 32,9 W/(m•K), und einen Porenfläche-Prozentanteil von mehr als 7,56% aufweist.

2. Sinterkörper nach Anspruch 1, wobei das Übergangsmetall Fe umfaßt.

3. Sinterkörper nach Anspruch 1, wobei das Übergangsmetall Mo umfaßt.

## Revendications

1. Corps fritté de nitrure de silicium destiné à une utilisation en tant qu'élément glissant dans des environnements lubrifiés par un fluide, produit par frittage d'une poudre mélangée constituée d'un sulfure de métal de transition, d'une poudre à base de nitrure de silicium et d'un additif de frittage, le corps fritté constitué de pores minuscules, de nitrure de silicium aciculaire minuscule et d'un siliciure dudit métal de transition étant uniformément dispersés dans au moins la surface du corps fritté de nitrure de silicium, ledit corps fritté présentant une conductivité thermique inférieure à 32,9 W/(m·K) et un pourcentage de surface des pores de plus de 7,56 %.

2. Corps fritté selon la revendication 1,
**dans lequel**
ledit métal de transition comprend Fe.

3. Corps fritté selon la revendication 1,
**dans lequel**
ledit métal de transition comprend Mo.
